# EUROPEAN PATENT APPLICATION

(11) **EP 1 124 277 A2**
(43) Date of publication of application: **16.08.2001**
(21) Application number: 01301104.4
(22) Date of filing: 08.02.2001
(51) Int. Cl.: H01M 10/40

(54) **Lithium secondary battery**

(30) Priority: 09.02.2000 JP 2000032362
(71) Applicant: NGK INSULATORS, LTD., Nagoya-City, Aichi Prefecture 467-8530 (JP)
(72) Inventor: Yang, Li, c/o NGK Insulators, Ltd., Nagoya City, Aichi Pref., 467-8530 (JP); Yoshida, Toshihiro, c/o NGK Insulators, Ltd., Nagoya City, Aichi Pref., 467-8530 (JP)
(74) Representative: Paget, Hugh Charles Edward

(57) **Abstract**

A lithium secondary battery includes an electrode unit produced by winding or laminating a positive electrode and a negative electrode via a separator, and a non-aqueous electrolytic solution containing a lithium compound as an electrolyte. The cumulative concentration of water (H₂O) released fromboth of the positive electrode and the negative electrode is suppressed to 5,000 ppm or lower in relation to the weight of the electrode unit, exclusive of current collectors, in the case where both electrode plates are heated at 25 to 200°C and/or 1,500 ppm or lower in the case where both electrode plates are heated at 200 to 300°C. The lithium secondary battery can have high charging and discharging efficiency, excellent cycle property and reliability by suppressing deterioration of battery properties.

## Description

### Background of the Invention

### (1) Field of the Invention

The present invention relates to a lithium secondary battery in which the deterioration of battery properties attributed to water released from both of a positive electrode and negative electrode and existing in the non-aqueous electrolytic solution packed in the battery is suppressed.

### (2) Description of Related Art

A lithium secondary battery, in recent years , has widely been employed as a secondary battery chargeable and dischargeable, small in size, having a high energy density, and capable of functioning as an electric power source of electronic appliances such as portable communication appliances, notebook type personal computers and the like. Further, in the situation where people have been paying much attention to resource saving and energy saving for the international protection of global environments, the lithium secondary battery is expected to be used, in the automobile industry, as a battery for driving a motor of an electric automobile and a hybrid electric automobile and, in the electric power industry, as a means for efficiently utilizing electric power by storing night time electric power. It is, therefore, urgently required to develop a lithium secondary battery with a large capacity and practically suitable for the above applications.

In a lithium secondary battery, generally, a lithium transition metal compound oxide or the like is used as a positive electrode active material and a carbonaceous material such as hard carbon and graphite is used as a negative electrode active material. A lithium secondary battery comprising such materials has a reaction potential as high as about 4.1 V and therefore, it is impossible to use an aqueous electrolytic solution, which has been used for a conventional secondary battery.

A non-aqueous electrolytic solution comprising an organic solvent and a lithium compound dissolved therein as a lithium ion (Li⁺) electrolyte is, therefore, used as a non-aqueous electrolytic solution of a lithium secondary battery.

It is common that water, though the amount is very slight, exists as a contaminant already in the production stage in an organic solvent to be used as a raw material of a non-aqueous electrolytic solution. Further, since various kinds of materials and parts constituting a battery, for instance an electrode active material powder, a current collector substrate (a metal foil), a metal terminal, a battery case, and so forth are in general stored in the atmosphere, the moisture adsorbed on the surfaces of these materials and parts may sometimes be taken in the non-aqueous electrolytic solution on the completion of the assembly of a battery.

If such water exists in the non-aqueous electrolytic solution, the probability of hydrolysis of the electrolyte is increased and the risk of evolution of an acidic substance, a gas, and the like is heightened, resulting in undesirable problems; deterioration of the charge-discharge cycle property (meaning battery capacity alteration characteristic caused by repeated charging and discharging and hereinafter referred to as cycle property) and a short battery life.

Among the causes of taking water in the non-aqueous electrolytic solution is water released from electrode plates after the electrode plates are packed in a battery. Though electrode plates are manufactured in strict environments, regarding a battery with a large capacity and produced by winding or laminating electrode plates manufactured by applying electrode active materials to current collector substrates, the moisture adsorbed in the electrode active materials or the like cannot completely be removed only by a normal drying process.

For example, as it will be mentioned later, using an organic binder, an electrode active material is applied to a current collector substrate and formed into a prescribed shape such as a tape-like shape and during the forming process, the electrode active material is mixed with an organic solvent or water to be in the slurry or paste state to be used. At the time of producing a slurry, in the case where an insufficiently dried raw material of an electrode active material is used or the water concentration of the organic solvent used for the slurry production is not controlled and subsequently, the water control in the produced slurry is imperfect, the probability of adsorption of water in the electrode active material is extremely high.

Further, also in the case where the environments and drying conditions for the slurry formation and the storage conditions after the formation are not properly controlled, it is probable to adsorb moisture on the electrode active material from the outside. A slight amount of such moisture adsorbed on the electrode active material is hard to completely remove by drying treatment in the assembly stage of a battery.

In such a manner, moisture adsorbed on an electrode plate, especially on an electrode active material and a binder moves to a non-aqueous electrolytic solution after assembly of a battery and similar to water contained in the non-aqueous electrolytic solution from the beginning, the moisture becomes a cause of deterioration of the battery properties. That is, water contained in the electrode plate and hence existing in the non-aqueous electrolytic solution greatly affects the battery properties and makes it difficult to provide excellent battery properties only by controlling the water in the non-aqueous electrolytic solution to fill the battery. In other words, it is supposed to be necessary to control the water concentration in the electrode unit to be packed in a battery.

Inventors of the present invention have sincerely studied to deal with the above-described problems in the conventional technique and subsequently found that excellent charging and discharging efficiency and cycle property can be obtained in the case where water released from both of a positive electrode and a negative electrode after both electrode plates are packed in a battery and consequently existing in a non-aqueous electrolytic solution is at a prescribed value or lower and thus developed the present invention.

### Summary of the Invention

According to the present invention, there is provided a lithium secondary battery comprising an electrode unit produced by winding or laminating a positive electrode and a negative electrode via a separator, and a non-aqueous electrolytic solution containing a lithium compound as an electrolyte, wherein the cumulative concentration of water (H₂O) released from both of the positive electrode and the negative electrode in relation to the weight of the electrode unit, exclusive of current collectors, is suppressed to 5,000 ppm or lower in the case of heating both electrodes at 25 to 200°C and/or to 1,500 ppm or lower in the case of heating the electrodes at 200 to 300°C.

The lithium compound to be used preferably for such a lithium secondary battery of the present invention is lithium hexafluorophosphate. Further, a material to be employed for the electrode active material is not specifically limited and in the case where lithium manganese oxide containing lithium and manganese as main components and having a cubic system spinel structure is used as the electrode active material, the internal resistance of the battery can be suppressed low. Furthermore, a highly graphitized carbon fiber is preferably used as the negative electrode active substance. The present invention is suitably applied to a large scale battery having a battery capacity of 2 Ah or more. Also, a lithium secondary battery of the present invention is suitably used as an electric power source for driving a motor of an electric automobile or a hybrid electric automobile in which large current discharge is frequently caused.

### Brief Description of the Drawings

Fig. 1 is a perspective view illustrating the structure of a rolled type electrode unit.

Fig. 2 is a perspective view illustrating the structure of a laminated type electrode unit.

Fig. 3 is an illustration of the apparatus for measuring the concentration of water released from an electrode plate.

Fig. 4 is a graph illustrating the charging and discharging pattern in the cycle test. Detailed Description of the Preferred Embodiments

A lithium secondary battery of the present invention is one comprising a non-aqueous electrolytic solution containing a lithium compound dissolved therein to provide lithium ion (Li⁺) as an electrolyte. Consequently, the materials for other components and the battery structure are not at all restricted. Hereinafter, description will be given at first on the main members constituting the battery and on their structures.

One structure of an electrode unit, which may be compared to a heart part, of a lithium secondary battery is a single cell structure comprising a positive electrode active substance and a negative electrode active substance press-molded into a disk-like shape and a separator interposed between them and such a structure is of a coin type battery with a small capacity.

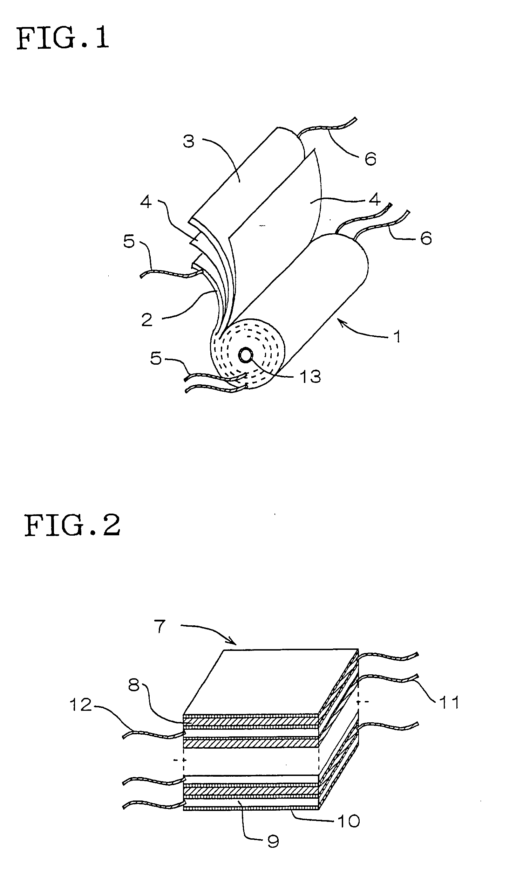

In contrast with the structure of a battery with a small capacity just like a coin type battery, one structure of an electrode unit to be employed for a battery with a large capacity is a rolled type. As shown in the perspective view of Fig. 1, a rolled type electrode unit 1 is constituted of a positive electrode 2, a negative electrode 3, and a separator 4 of a porous polymer which are so rolled around a core 13 as to interpose the separator between the positive electrode 2 and the negative electrode 3 for keeping them from direct contact with each other. The positive electrode 2 and the negative electrode 3 (hereinafter referred to as the electrodes 2, 3) are connected separately to at least one electrode lead 5, 6 and can be connected separately to a plurality of electrode leads 5, 6 to lower the resistance of the current collectors.

Another structure of the electrode unit includes a laminated type obtained by laminating a plurality of electrode units each applicable for a single cell type coin battery. As shown in Fig. 2, a laminated type electrode unit 7 is obtained by reciprocally laminating positive electrodes 8 and negative electrodes 9 both with prescribed shapes while interposing separators 10 between them and connecting at least one electrode lead 11, 12 respectively to each one of electrodes 8, 9. The materials used for the electrodes 8, 9, the production methods therefor, and the like are same as those of the electrodes 2, 3 in the rolled type electrode unit 1.

Next, using the wound type electrode unit 1 as an example, the constitution will be described in detail. The positive electrode 2 is produced by applying a positive electrode active substance to both sides of a current collector substrate. A metal foil such as an aluminum foil, a titanium foil, and the like excellent in the corrosion resistance to cathodic electrochemical reactions is preferably used for the current collector substrate and further besides the foil, a punched metal or a mesh may also be employed. Preferable compounds to be used for the positive electrode active substance are lithium transition metal compound oxides such as lithium manganese oxide (LiMn₂O₄), lithium cobalt oxide (LiCoO₂), lithium nickel oxide (LiNiO₂), and the like and it is preferable to add, as a conductivity-improving agent, a fine carbon powder such as acetylene black or the like to these compounds.

It is especially preferable to use a lithium manganese oxide having a cubic system spinel structure (hereinafter referred to as LiMn₂O₄ spinel), for the resistance of the electrode unit can be lowered as compared with that of an electrode unit using other electrode active materials.

The LiMn₂O₄ spinel is not limited to such a spinel oxide with stoichiometric composition alone and also preferable to be used is a spinel obtained by partly substituting Mn of the spinel with one or more elements and having a general formula; LiMₓMn₂₋ₓO₄ (M denotes a substituent element and x denotes the ratio of the substitution). As the substituent element M, there can be mentioned Li, Fe, Mn, Ni, Mg, Zn, B, Al, Co, Cr, Si, Ti, Sn, P, V, Sb, Nb, Ta, Mo and W.

In this case, the substituent element M is an element forming a solid-solution in the LiMn₂O₄ theoretically in the form of monovalent Li; bivalent Fe, Mn, Ni, Mg or Zn; trivalent B, Al, Co, or Cr; tetravalent Si, Ti, and Sn, pentavalent P, V, Sb, Nb, or Ta; or hexavalent Mo or W cation. The following are also possible that Co and Sn are bivalent; Fe, Sb, and Ti trivalent; Mn trivalent or tetravalent; and Cr tetravalent or hexavalent.

Subsequently, the respective substituent elements M may sometimes exist in a mixed valency state and the quantity of oxygen may, therefore, not necessarily be 4 as in the case of the stoichiometric composition and may be deficient or excessive within a defined range as long as the crystal structure is maintained.

The application of the positive electrode active substance is carried out by applying a slurry or a paste produced by adding a solvent, a binder, and the like to a positive electrode active substance powder to a current collector substrate by a roll coater method or the like and drying the resulting material, and then, based on necessity, pressing treatment or the like may be carried out.

The negative electrode 3 can be produced in the same manner as for the positive electrode 2. A metal foil such as a copper foil, a nickel foil, and the like excellent in the corrosion resistance to anodic electrochemical reactions is preferably used for the current collector substrate of the negative electrode 3. The compounds to be used for the negative electrode active substance are amorphous carbonaceous material powder such as soft carbon and hard carbon, highly graphitized carbonaceous material powder such as synthetic graphite and natural graphite.

As the separator 4, it is preferable to use a three-layer structure comprising a microporous and Li⁺-permeable polyethylene film (PE film) and porous and Li⁺-permeable polypropylene films (PP films) sandwiching the PE film between them. In the separator, when the temperature of the electrode unit is increased, the PE film is softened at about 130°C and the micropores are broken and thus the separator functions also as a safety mechanism of suppressing the movement of Li⁺, i.e. the battery reactions. By sandwiching the PE film between PP films of a more softening point, the PP films retain the shape to prevent contact and short circuit between the positive electrode 2 and the negative electrode 3, to reliably suppress the battery reactions, and to secure the safety even when the PE film is softened.

During the winding work of the electrode plates 2, 3 and the separator 4, electrode leads 5, 6 are separately joined to a part of each electrodes 2, 3 in which no electrode active substance is applied and where each current collector substrate is exposed. As the electrode leads 5, 6, it is preferable to use those made of foils of the same materials as those of the current collector substrates of the respective electrodes 2, 3. The joining of the electrode leads 5, 6 to the electrodes 2, 3 can be carried out by ultrasonic welding, spot welding or the like. In that case, as shown in Fig. 1, it is preferable to join electrode leads 5, 6 in a manner where one of the electrode leads of the respective electrodes is joined to one end face of the electrode unit 1, for the electrode leads 5, 6 can be kept from contact with each other.

In the case of assembling a battery, at first, the produced electrode unit 1 is inserted into a battery case and held in a stable position while the electric communication of terminals for taking electric current out to the outside with electrode leads 5, 6 being reliably secured. After that, the electrode unit is impregnated with a non-aqueous electrolytic solution and then the battery case is sealed to produce a battery.

Next, it will be described regarding the non-aqueous electrolytic solution to be employed for a lithium secondary battery of the present invention. Preferable examples of the solvent are carbonic acid esters such as ethylene carbonate (EC), diethyl carbonate (DEC), dimethyl carbonate (DMC), propylene carbonate (PC), and the like; single solvents such as γ-butyrolactone, tetrahydrofuran, acetonitrile, and the like; and their mixtures.

A lithium compound to be dissolved in such a solvent, i.e. an electrolyte, includes a lithium complex fluoride such as lithium hexafluorophosphate (LiPF₆), lithium borofluoride (LiBF₄), and the like and a lithium halogen compound such as lithium perchlorate (LiClO₄) and the like. One or more of these compounds are dissolved in the foregoing solvent to be used. It is especially preferable to use LiPF₆ which is hardly oxidized and decomposed and has a high conductivity in the non-aqueous electrolytic solution.

In the assembly process of a battery using a variety of the foregoing constituent members, strict water control is carried out in the respective production stages for the electrode unit, the electrolytic solution, and the respective parts.

However, in a view of the conditions for the production of the electrode active material slurry and the environments during the production of the electrode plates, the probability of moisture adsorption on the electrode active materials, the solvent, and the binder is considerably high in the production process of the electrode plates and contamination of a small amount of water is thus practically inevitable.

In a battery produced in such a manner, although water released from the electrode plates inevitably exists in the non-aqueous electrolytic solution, the precise amount of the water and the effect of the water on the battery properties have not been made clear. The inventors of the present invention, therefore, have precisely detected the amount of water existing in the electrode plates and subsequently contained in the electrolytic solution and found that the relation between the water amount and the deterioration of the battery properties and developed the present invention.

Hence, in the present invention, the cumulative concentration of water released from both of the positive electrode and the negative electrode in relation to the weight of the electrode unit besides the current collectors is suppressed to 5,000 ppm or lower in the case of heating both electrodes at 25 to 200°C. As described below in examples, the initial charging and discharging efficiency has been verified to be maintained high in the case where water concentration is suppressed to 5,000 ppm or lower when both electrode plates are heated at 25 to 200°C. The water to be released in this temperature range is supposed to be water released from the electrode plates in the stage in which the electrode plates are inserted into the battery case and the battery case is filled with the electrolytic solution and the water supposedly affects the initial charging and discharging efficiency. The SEI layer formation on the active material surface results from the water. The methods suitable to be employed as the method for suppressing the concentration of water released from both electrode plates to 5,000 ppm or lower at the time of heating at 25 to 200°C are (1) slurry preparation in the environment of a low humidity (<30% R.H.), (2) optimization of the drying temperature (>150°C) of coated bodies, and (3) rolled body production in the environment of a low humidity (<30% R.H.).

Further, in the present invention, the cumulative concentration of water released from both of the positive electrode and the negative electrode in relation to the weight of the electrode unit besides the current collectors is suppressed to 1,500 ppm or lower in the case of heating both electrodes at 200 to 300°C. In this case, the self-discharging efficiency and the cycle property have been verified to be maintained excellent. The water released in this temperature range is supposed to be water released from the electrode plates due to activation of water by electric reaction during repetition of charging and discharging and the water supposedly affects the self-discharge and cycle property deterioration in a middle to long period. The methods suitable to be employed as the method for suppressing the concentration of released water to 1,500 ppm or lower at the time of heating both electrode plates at 200 to 300°C are (1) slurry preparation in the environment of a low humidity (<30% R.H.), (2) optimization of the drying temperature (>150°C) of coated bodies, and (3) rolled body production in the environment of a low humidity (<30% R.H.).

In the present invention, tests were carried out for electrode plates while the cumulative concentration of water released from both of the positive electrode and the negative electrode satisfying the above described two conditions being controlled to 5,000 ppm or lower in relation to the weight of the electrode unit besides the current collectors at the time of heating the electrode unit at 25 to 200°C and to 1,500 ppm or lower at the time of heating at 200 to 300°C. By the tests, the initial charging and discharging efficiency, the self-discharging efficiency, and cycle property were all found excellent.

As described above, the increase of the temperature of the electrode plates means the observation of the water release from the electrode plates with the lapse of time and can correspondingly be considered as alteration of the battery properties with the lapse of time. In other words, that the temperature is increased owing to heating of the electrode plates at 25 to 200°C and at 200 to 300°C can be supposed to be causes of deterioration of battery properties for the middle and long periods from immediate after production of the battery.

Consequently, by producing electrodes in which the water concentration is regulated to the forgoing prescribed values or lower in the respective temperature ranges, a battery showing excellent battery properties immediate after the battery production and in a long duration can be produced. Further, in the case where only a single property, i.e. the high initial charging and discharging efficiency, the excellent self-discharging efficiency, or the cycle property, is required respectively, for example, in the case where a battery has a relatively short utilization period and a long cycle property is not required, it is sufficient for the electrode plates to satisfy the prescribed water concentration at 25 to 200°C and it is not required to take the water concentration at 200 to 300°C into consideration for the electrodes. That is , if a battery is required to have separate properties, the electrodes may be produced in consideration of the required properties alone.

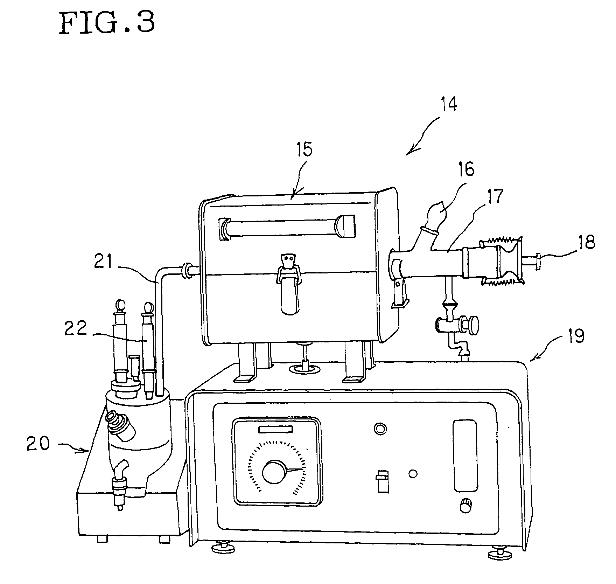

Meanwhile, the Karl Fischer's method is preferably employed for the measurement of the concentration of water released from both of the positive electrode and the negative electrode. At the time of actual measurement, as shown in Fig. 3, the measurement is carried out by putting both electrodes to be subjected to the measurement in an electric furnace 15 through a specimen setting inlet 16, increasing the temperature of the electrodes by a heating pipe 17 in the inert gas flow, and sending the released water to a measurement part 20 through a suction pipe 21.

In the Karl Fischer's method, a non-aqueous electrolytic solution is dissolved or dispersed in methanol and the resulting sample solution is titrated with a reddish brown Karl Fischer's reagent, a reagent for water quantitative determination for the volumetric analysis, obtained by dissolving iodine, sulfur dioxide, and pyridine in methanol ordinarily at a molecular ratio of 1 : 3 : 10 and the measurement can be carried out by observing the alteration of the color of the reaction solution by a colorimetric titration, a potentiometric titration, or an amperometric titration.

### Examples

The present invention will more particularly be described on the basis of examples below.

### Examples 1 to 5

Each battery of examples 1 to 5 was produced by producing a positive electrode by applying a positive electrode substance slurry containing LiMn₂O₄ spinel as a positive electrode active substance, acetylene black as a conductivity-improving agent in 4% by mass as an extrapolating ratio, a solvent, and a binder to both sides of a 20 µm thick aluminum foil to form about 100 µm thick coatings on both sides, producing a negative electrode by the same manner by applying a negative electrode active substance using a carbon powder to both sides of a 10 µm thick copper foil in about 80 µm thickness, producing a wound type electrode unit comprising the produced positive electrode and negative electrode, housing the obtained electrode unit in a battery case, and filling the resultant battery case with a non-aqueous electrolytic solution.

Table 1 shows the results of evaluation of the initial charging and discharging efficiency, the self-discharging efficiency, and the cycle property of each of the foregoing examples. The electrodes of respective examples 1 to 5 were produced by the above described method using various electrode constituent members which were so adjusted as to cause the difference in the concentrations of water released from the respective electrodes. The other members and the testing environments were the same for all of the samples and the battery members were sufficiently dried immediate before the assembly of the respective batteries and there is eliminated the effect of such as water penetration from the outside of the batteries due to defective sealing of the batteries. In addition, a solution containing a mixed solvent of EC and DEC in the same volume and LiPF₆ as an electrolyte dissolved in the mixed solvent in 1 mol/l concentration was employed as a non-aqueous electrolytic solution.

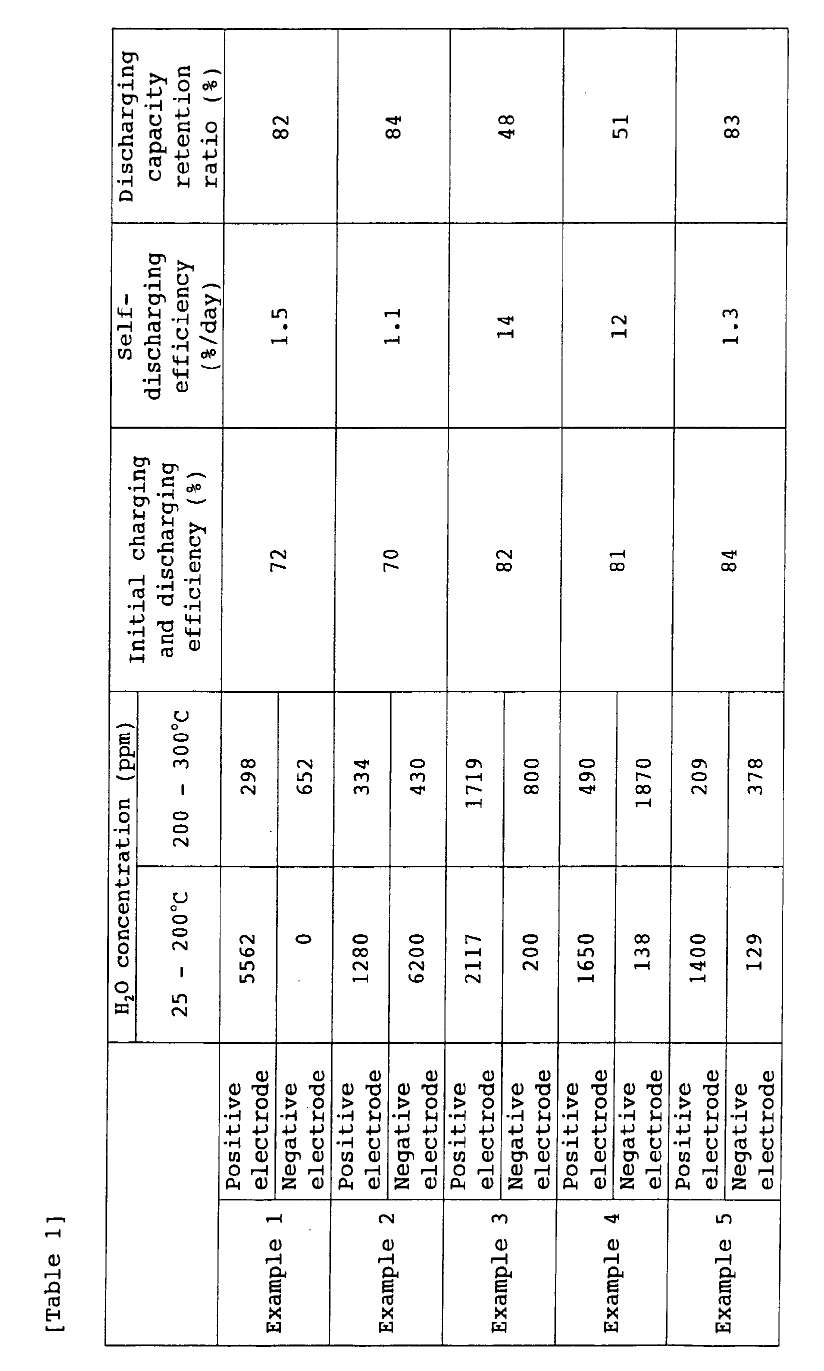

Charging and discharging of batteries were carried out, as shown in Table 2, in 9 steps. In Table 2, 0.5C is the discharge rate meaning performance of charging and discharging at 1 A electric current, CH means the charging process, and DCH means the discharging process. The steps (1) to (9) were named step A to step I, respectively. The initial charging and discharging efficiency (%) was calculated based on the equation B/A × 100 and the self-discharging efficiency (%) was calculated based on the equation (1 - 2G/(D + 1))/3.

**[Table 2]**

| Charging and discharging step | Content capacity |
|---|---|
| (1) A | 0.5C CH |
| (2) B | 0.5C DCH |
| (3) C | 0.5C CH |
| (4) D | 0.5C DCH |
| (5) E | 0.5C CH |
| (6) F | Kept still for 3 days |
| (7) G | 0.5C DCH |
| (8) H | 0.5C CH |
| (9) I | 0.5C DCH |

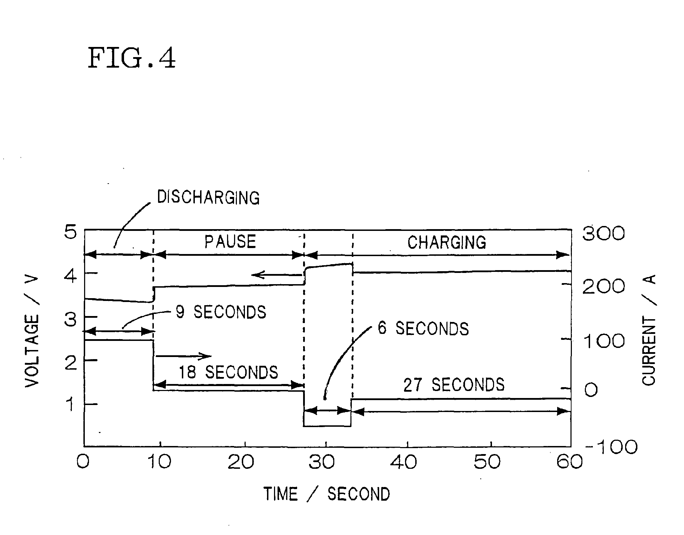

The cycle test was carried out by assuming that the charging and discharging cycle shown in Fig. 4 is one cycle, and repeating the charging and discharging cycle. Evaluation was given as the discharging capacity retention ratio after repeating the charging and discharging cycles 20,000 times. Every cycle was carried out in a pattern in which batteries in charged state of 50% depth of discharge were discharged for 9 seconds at 100 A current equivalent to 10C (discharge rate), then put in pause for 18 seconds, after that further charged for 6 seconds at 70 A, successively charged for 27 seconds at 18 A, and finally put in 50% charged state again. In that case, the current value at the second time charging (18 A) was finely adjusted to suppress the difference of the depth of discharge in every cycle to the minimum. In order to know the alteration of battery capacity in the durability test, capacity measurement was properly carried out at 0.2C current intensity while setting the charge stopping voltage at 4.1 V and the discharge stopping voltage at 2.5 V and the relative discharging capacity was computed as a value calculated by dividing the battery capacity in the cycles at prescribed times by the initial battery capacity.

### (Evaluation)

As being understood from Table 1, if the cumulative concentration of water released from both of a positive electrode and a negative electrode in relation to the weight of an electrode unit besides the current collectors was suppressed to 5,000 ppm or lower in the case where both electrodes were heated at 25 to 200°C, it was found that the initial charging and discharging efficiency was kept high. Also if the concentration was suppressed to 1, 500 ppm or lower in the case where the electrodes were heated at 200 to 300°C, it was found that the self-discharging efficiency and cycle property were kept preferably. Subsequently, in the case of electrode plates satisfying the above described two conditions, batteries were found being provided with battery properties excellent in both of the initial charging and discharging efficiency, and the self-discharging efficiency and the cycle property.

In the above, the present invention has been described mainly on a case using a wound type electrode unit. However, the present invention is applicable independently of the structure of a battery and can be employed suitably for a battery with a large capacity in which water control is not easy during the production process. More specifically, the capacity of present invention can suitably be employed for a battery having a capacity of 2 Ah or more and comprising wound type or laminated type electrode units 1, 7.

Needless to say, the use of a battery of the present invention is not at all restricted. A lithium secondary battery of the present invention is especially suitably used as a battery for driving a motor of an electric automobile or of a hybrid electric automobile which requires the battery to have a low internal resistance, an excellent charging and discharging efficiency and cycle property.

According to the present invention, restriction is posed in the cumulative concentration of water released from both of a positive electrode and a negative electrode and existing in the non-aqueous electrolytic solution packed in a battery. Consequently, the present invention is effective to improve the initial charging and discharging efficiency, the self-discharging efficiency, and the cycle property and to prolong the life of the battery.

## Claims

1. A lithium secondary battery comprising:
an electrode unit obtained by winding or laminating a positive electrode and a negative electrode via a separator, and
a non-aqueous electrolytic solution containing a lithium compound as an electrolyte,
wherein a cumulative concentration of water (H₂O) released from both of said positive electrode and said negative electrode in relation to the weight of said electrode unit, exclusive of current collectors, is suppressed to 5,000 ppm or lower in case of heating both electrodes at 25 to 200°C and/or to 1,500 ppm or lower in case of heating said electrodes at 200 to 300°C.

2. The lithium secondary battery according to Claim 1, wherein said lithium compound is lithium hexafluorophosphate.

3. The lithium secondary battery according to Claim 1 or 2, wherein a lithium manganese oxide containing lithium and manganese as main components and having a cubic system spinel structure is used as the positive electrode active substance.

4. The lithium secondary battery according to any one of Claims 1 to 3, wherein a highly graphitized carbon fiber is used as the negative electrode active substance.

5. The lithium secondary battery according to any one of Claims 1 to 4, which has a battery capacity of 2 Ah or more.

6. The lithium secondary battery according to any one of Claims 1 to 5, which is used in an electric automobile or a hybrid electric automobile.
